# FASCICULE DE BREVET EUROPEEN

(11) **EP 3 625 022 B1**
(45) Date de publication et mention de la délivrance du brevet: **19.03.2025**
(21) Numéro de dépôt: 18724557.6
(22) Date de dépôt: 15.05.2018
(51) Int. Cl.: B29C 45/16, B60Q 1/00, B29D 11/00, B29C 45/14, B29L 31/30

(54) **PROCÉDÉ DE FABRICATION D'UNE COQUE COMPRENANT UN FILM DÉCORATIF**
VERFAHREN ZUR HERSTELLUNG EINER SCHALE MIT EINER ZIERFOLIE
PROCESS FOR MANUFACTURING A SHELL COMPRISING A DECORATIVE FILM

(30) Priorité: 15.05.2017 FR 1754265
(43) Date de publication de la demande: 25.03.2020
(73) Titulaire: Marelli Automotive Lighting France, 89330 Saint-Julien-du-Sault (FR)
(72) Inventeur: BUISSON, Alain, 78320 Le Mesnil-Saint-Denis (FR); ARRIVET, Franck, 78190 Trappes (FR)
(74) Mandataire: Jacobacci Coralis Harle
(86) Numéro de dépôt international: PCT/EP2018/062623
(87) Numéro de publication internationale: WO 2018/210882

(56) Documents cités:
- EP-A1- 2 666 610
- FR-A- 1 451 327
- US-A1- 2013 069 274

## Description

### Domaine technique

La présente invention concerne le domaine technique du surmoulage de pièces, de préférence par injection.

### État de la technique

Il est connu de l'état de la technique la réalisation des coques plastiques, mettant en œuvre des étapes de moulage et de surmoulage. Plus précisément, un premier élément de la coque est moulé par injection de matière plastique à chaud dans un moule dédié. Ce premier élément sert ensuite de support pour surmouler une ou plusieurs épaisseurs de plastique, afin de former une coque de forte épaisseur. Des coques plastiques complexes et robustes, comprenant plusieurs éléments indissociables, sont ainsi formées.

Selon un autre avantage, ce procédé permet également la fabrication de coques plastiques comprenant des matériaux de nature différente pour fonctionnaliser la coque. Par exemple, une coque plastique peut comprendre un film décoratif, configuré pour modifier ses propriétés de transmission ou de réflexion de la lumière. De préférence, le film décoratif est encapsulé entre deux couches de plastique afin de le protéger de l'environnement extérieur.

Néanmoins, ce procédé de fabrication présente l'inconvénient de devoir mouler le film décoratif, ou bien surmouler le film décoratif contre un autre élément. Or, le procédé de moulage ou de surmoulage à chaud met en œuvre une étape d'injection, sous forme visqueuse ou liquide, de la matière plastique formant le film décoratif. Cette étape d'injection implique la formation d'un film décoratif dont les propriétés optiques sont plus ou moins homogènes le long de la coque. Selon un autre inconvénient, le surmoulage du film décoratif contre un élément de la coque et inversement, implique également que les dimensions du film décoratif sont sensiblement égales à un ou plusieurs éléments adjacents au film décoratif. Ce procédé de fabrication ne permet donc pas une grande variété de motifs et de formes possibles pour le film décoratif. Un autre procédé de surmoulage est décrit dans le document US 2013/069274 A1.

Selon un autre inconvénient, lors des étapes de surmoulage, les faces du film décoratif sont exposées à de fortes températures et pressions, susceptibles de dégrader et/ou déformer le film décoratif et donc son motif.

Il est ainsi apparu le besoin d'un nouveau procédé de fabrication de coques plastiques de forte épaisseur, comprenant un film décoratif aux motifs variés et préservant au mieux ses caractéristiques lors de la fabrication de la coque.

### Description de l'invention

Afin d'atteindre cet objectif, l'invention propose un procédé de fabrication d'une coque, comprenant un film décoratif, mettant en œuvre une première étape de moulage d'un matériau plastique de manière à former un premier élément.

L'invention se caractérise en ce que le procédé de fabrication met en œuvre une deuxième étape consistant à appliquer un film décoratif contre une face avant du premier élément, puis une troisième étape de surmoulage d'un matériau plastique sur au moins une partie du film décoratif et du premier élément, de manière à maintenir le film décoratif entre le premier élément et un deuxième élément de la coque.

Autrement dit, le film décoratif et le premier élément de la coque sont réalisés indépendamment. Ainsi, contrairement au procédé de l'état de la technique décrit ci-dessus, le film décoratif et le premier élément ne sont pas exposés à des températures et des pressions élevées lors de leur union, susceptibles de modifier leurs caractéristiques. En effet, cette étape d'union est réalisée à une température et à une pression inférieure à celles nécessaires pour injecter une matière plastique dans un moule. De ce fait, les propriétés de l'interface entre le film décoratif et le premier élément sont contrôlées plus précisément.

Il est à noter que la troisième étape mise en œuvre par l'invention permet de former un deuxième élément de la coque, de manière à ce qu'au moins une partie du film décoratif soit protégée de l'environnement extérieur par le premier et le deuxième élément. De préférence, au moins une partie du deuxième élément est en vis-à-vis avec le premier élément pour assurer un meilleur maintien du film décoratif entre lesdits éléments.

Selon une autre caractéristique de l'invention, le film décoratif recouvre une partie seulement de la face avant du premier élément de la coque. En d'autres termes, la surface du film décoratif peut être inférieure à la surface de la face avant du premier élément. L'invention propose ainsi un procédé de fabrication permettant une plus grande variété de formes du film décoratif.

Selon une autre caractéristique de l'invention, le premier élément et/ou le deuxième élément est transparent et/ou translucide. L'un des éléments est transparent ou translucide, afin de permettre à un observateur d'observer les contours du film décoratif à travers ledit élément. De préférence, le premier et le deuxième élément sont transparents afin de permettre à une source de lumière de projeter les contours du film décoratif sur un plan d'observation.

Selon une autre caractéristique de l'invention, le film décoratif est perforé. Ainsi, les propriétés de transmission de la lumière à travers le film décoratif sont hétérogènes le long dudit film, pour permettre la réalisation de motif plus complexe et varié.

Selon un autre avantage, la présence d'un ou plusieurs trous permet de former des passages, à travers le film décoratif, dans lesquels le deuxième élément peut pénétrer lors de la troisième étape de surmoulage, afin que le deuxième élément puisse adhérer directement sur le premier élément et ainsi assurer un meilleur maintien du film décoratif entre le premier et deuxième élément.

Selon un autre avantage, les passages peuvent former au moins un logement dans lequel s'emboîte une excroissance du premier élément, située au niveau de sa face avant, afin de permettre un meilleur maintien du film décoratif le long de ladite face lors de la troisième étape de surmoulage. Ce mode de réalisation permet avantageusement d'éviter un décalage du film décoratif par rapport au premier élément lors de la formation du deuxième élément de la coque.

Selon un autre mode de réalisation de l'invention, le premier élément et/ou le deuxième élément comporte(nt) des dioptres optiques alignés avec au moins un trou perforant le film décoratif. Les dioptres optiques permettent de modifier localement l'intensité d'un faisceau lumineux traversant un élément, pour offrir une plus grande variété d'éclairage de la coque.

Selon une autre caractéristique de l'invention, le film décoratif comporte au moins deux zones transmettant la lumière de façon différente. À titre d'exemple, le film décoratif peut comprendre au moins deux zones de couleur différentes. Selon un autre exemple, la surface du film décoratif peut être partiellement grainée. Selon un autre exemple, le film décoratif peut être composé de plusieurs matériaux distincts.

Selon une autre caractéristique de l'invention, le film décoratif est recouvert, au moins partiellement, par un dépôt de matière. De préférence, le dépôt de matière recouvre la face du film décoratif appliquée contre le premier élément. Ainsi, le film décoratif forme un bouclier thermique, permettant de limiter de manière significative l'élévation de la température du dépôt de matière lors de la troisième étape de surmoulage du deuxième élément sur le film décoratif. Les propriétés physiques du dépôt de matière sont ainsi préservées ce qui permet d'éviter, lors de la troisième étape de surmoulage, une dégradation du motif délimité par ledit dépôt. Le dépôt de matière est constitué d'une ou plusieurs couches. La transparence du film décoratif peut alors être modifiée en fonction de la nature et du nombre de couches de matière superposées, de transparent à translucide jusqu'à être opaque complétement opaque.

Selon un mode de réalisation préféré, le dépôt de matière est formé à partir d'une encre, comprenant de préférence des éléments métalliques à base d'argent, d'aluminium ou de chrome. Ainsi, le dépôt de matière peut être déposé sur le film décoratif selon une technique de sérigraphie. Afin de modifier l'aspect du dépôt de matière, sa surface peut être légèrement abrasée ou brossée avant la troisième étape de surmoulage.

Selon une variante de réalisation, le procédé de fabrication met en œuvre une étape intermédiaire d'application d'un moyen d'adhésion sur le film décoratif, afin d'assurer un meilleur maintien du film décoratif contre le premier élément lors du surmoulage du deuxième élément. Cette étape intermédiaire est réalisée avant l'exécution de la deuxième étape, consistant à appliquer le film décoratif contre une face avant du premier élément. De préférence, le moyen d'adhésion est appliqué au niveau de la périphérie de la face du film décoratif appliquée contre le premier élément. À titre d'exemple, le moyen d'adhésion peut comprendre une colle et/ou un adhésif de type double face dédié(s).

Selon une autre caractéristique de l'invention, la face avant du premier élément est de forme complexe et le film décoratif est de forme complémentaire à la face avant du premier élément. Par les termes « forme complexe », on entend une surface en relief. Ce mode de réalisation permet avantageusement d'assurer un meilleur maintien du film décoratif contre le premier élément, en évitant un glissement entre ces éléments, notamment lors de la troisième étape de surmoulage.

Selon une variante de réalisation, la face avant du premier élément est de forme concave et/ou convexe. Cette caractéristique met à profit les possibilités offertes par le procédé selon l'invention de réaliser des coques de formes complexes ne présentant pas de défaut d'aspect ou de forme dans la mesure où le procédé selon l'invention permet de bien maitriser les phénomènes de retrait.

Selon un mode de réalisation préféré de l'invention, le film décoratif est un film plastique thermoformé. La technique du thermoformage permet de conférer au film décoratif une certaine rigidité et maintien, facilitant son positionnement et son maintien contre le premier élément de la coque afin d'empêcher son plissement lors de son surmoulage par le deuxième élément de la coque.

Selon une autre caractéristique de l'invention, l'épaisseur du film décoratif est comprise entre 0,4mm et 0,6mm, de préférence de l'ordre de 0,5mm.

Selon une autre caractéristique de l'invention, l'épaisseur locale de toute partie d'une portion de coque est inférieure ou égale à 6mm, de préférence inférieure à 4mm. Selon une caractéristique de l'invention, l'épaisseur locale de la coque est comprise entre 1mm et 5 mm et de préférence égale ou supérieure à 3mm afin de lui conférer une certaine résistance mécanique pour être utilisée comme coque extérieure. L'épaisseur locale est mesurée à une distance supérieure à 1 mm des bords de la portion de coque. Par épaisseur locale, il convient d'entendre la plus petite des distances entre deux faces opposées du premier et deuxième élément, d'une partie d'une portion de coque.

Selon une autre caractéristique de l'invention, le procédé de fabrication peut comprendre d'autres étapes intermédiaires de surmoulage, afin de former une ou plusieurs épaisseurs supplémentaires entre le premier et le deuxième élément de la coque.

Selon une autre caractéristique de l'invention, le deuxième élément de la coque comprend au moins un moyen de fixation configuré pour maintenir la coque à un support. Selon un mode de réalisation, le moyen de fixation peut comprendre un appendice de forme complémentaire à logement présent dans le support.

Selon une mode de réalisation préféré de l'invention, au moins un élément de la coque est formé à partir de l'un des matériaux suivants : Polyméthacrylate de méthyle (PMMA), Polycarbonate (PC), Acrylonitrile butadiène styrène (ABS) ou des mélanges de celles-ci. Bien entendu, cette liste n'est ni limitative, ni exhaustive.

Les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également une lanterne pour véhicule automobile comprenant une coque obtenue à partir de l'un des procédés de fabrication décrits ci-dessus.

### Description des figures

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
- la figure 1 est une vue de profil d'un premier élément d'une coque selon l'invention ;
- la figure 2 est une vue de dessus du premier élément illustré à la figure 1 ;
- la figure 3 est une vue de profil d'un film décoratif positionné sur un premier élément illustré à la figure 1;
- la figure 4 est une vue de dessus de l'ensemble illustré à la figure 3 ;
- la figure 5 est une vue de profil d'une coque selon l'invention ;
- la figure 6 est une vue de dessus de la coque illustrée à la figure 5 ;
- la figure 7 est une vue de dessous d'un film décoratif sérigraphie ;
- la figure 8 est une vue de dessous d'un film décoratif selon la figure 7, comprenant une couche de colle ;
- la figure 9 est une vue d'un mode de réalisation alternatif d'une coque illustrée à la figure 5 ;
- les figures 10 et 11 sont des vues schématiques de modes de réalisation alternatifs d'une coque illustrée à la figure 5 ;
- la figure 12 est une vue schématique d'une coupe longitudinale d'une lanterne pour un véhicule automobile, comprenant une coque illustrée à la figure 11.

### Description de modes de réalisation détaillés de l'invention

Pour rappel, l'invention propose un nouveau procédé de fabrication d'une coque plastique de forte épaisseur, comprenant un film décoratif aux motifs variés et préservant au mieux ses caractéristiques lors de la fabrication de la coque.

Au sens de l'invention, une coque est une pièce dont l'épaisseur est petite par rapport à sa longueur développée ou mesurée le long de l'une de ses grandes faces lorsque la coque est non développable.

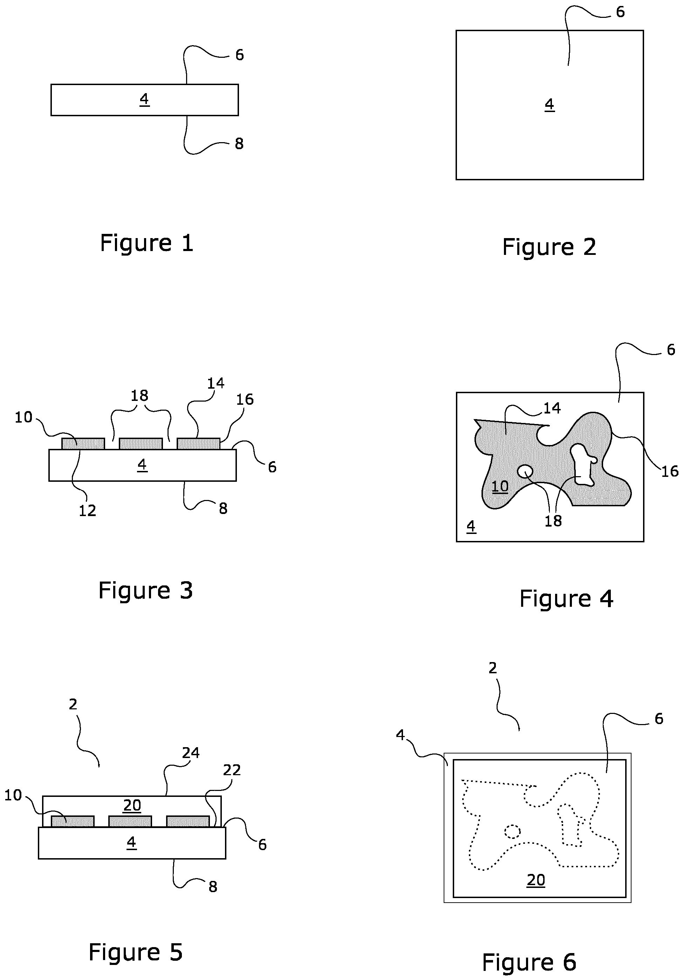

Selon l'invention, la fabrication de la coque 2 est réalisée de la façon suivante. Lors d'une première étape, un premier élément 4 de la coque est moulé par une technique d'injection de matière plastique à chaud dans un moule conçu à cet effet. La matière plastique utilisée est, par exemple, du Polyméthacrylate de méthyle (PMMA). Comme illustré aux figures 1 et 2, le premier élément 4 est délimité au niveau de ses plus grandes faces, par une face avant 6 opposée à une face arrière 8. Selon le présent exemple, la surface délimitée par la face avant 6 est comprise entre quelques cm² et quelques m². L'épaisseur du premier élément 4, définie comme la distance séparant la face avant 6 de la face arrière 8, est comprise entre 1,5mm et 3mm, de préférence comprise entre 1,7mm et 2mm. Selon le présent exemple, le premier élément 4 est plan.

Ensuite, lors d'une deuxième étape illustrée aux figures 3 et 4, un film décoratif 10 est appliqué contre la face avant 6 du premier élément 4. Cette deuxième étape est réalisée après avoir laissé refroidir suffisamment le premier élément 4, afin que la température de sa face avant 6 soit inférieure à 80°C, de préférence inférieure à 60°C. Ainsi, on limite les risques de déformation ou de dégradation de la face arrière 12 du film décoratif 10, en contact avec la face avant 6 du premier élément 4. Le film décoratif 10 peut être de nature identique ou différente au premier élément 4. Le film décoratif est de préférence thermoformé afin de lui conférer une rigidité certaine et ainsi faciliter sa manipulation. L'épaisseur du film décoratif 10, séparant sa face arrière 12 d'une face avant 14 opposée, est comprise entre 0,4mm et 0,6mm, de préférence de l'ordre de 0,5mm. Le contour 16 du film décoratif est adapté en fonction du motif que l'on souhaite réaliser dans la coque 2. L'invention permet ainsi une plus grande variété de formes de motif en s'affranchissant de la nécessité de surmouler le film décoratif 10 directement sur le premier élément 4 ou bien de devoir surmouler le premier élément 4 directement sur le film décoratif 10. Selon le présent exemple, le film décoratif 10 est perforé en plusieurs endroits par des trous 18, formant des passages à travers ledit film. Selon une autre caractéristique, les dimensions du film décoratif 10 sont inférieures à celle de la face avant 6 du premier élément 2. Plus précisément, le film décoratif 10 est centré sur la face avant 6 du premier élément 2. Bien entendu, dans le cadre de la présente invention, d'autres dimensions du film décoratif 10 et d'autres agencements sur le premier élément 2 sont envisageables.

Lors d'une troisième et dernière étape illustrée aux figures 5 et 6, il est procédé au surmoulage du film décoratif 10 par injection d'une matière plastique, compatible avec celle utilisée pour former le premier élément 4, afin de former la coque 2 selon l'invention. Plus précisément, la matière plastique est étalée contre la face avant 14 du film décoratif 10 et la face avant 6 du premier élément 4, de manière à encapsuler le film décoratif 10 entre le premier élément 4 et un deuxième élément 20. Le matériau utilisé pour former le deuxième élément 20 peut être de nature identique ou différente que celui constituant le premier élément 4. L'épaisseur du deuxième élément 20, définie comme étant la distance séparant une face arrière 22 en contact avec le film décoratif 10 et le premier élément 4, et une face avant 24 opposée à la face arrière 22, est comprise entre 1,5mm et 3mm, de préférence comprise entre 1,7mm et 2mm .

À présent, plusieurs variantes de réalisation de l'invention sont décrites ci-après. Les éléments communs à ces différentes variantes sont indexés par les mêmes références numériques.

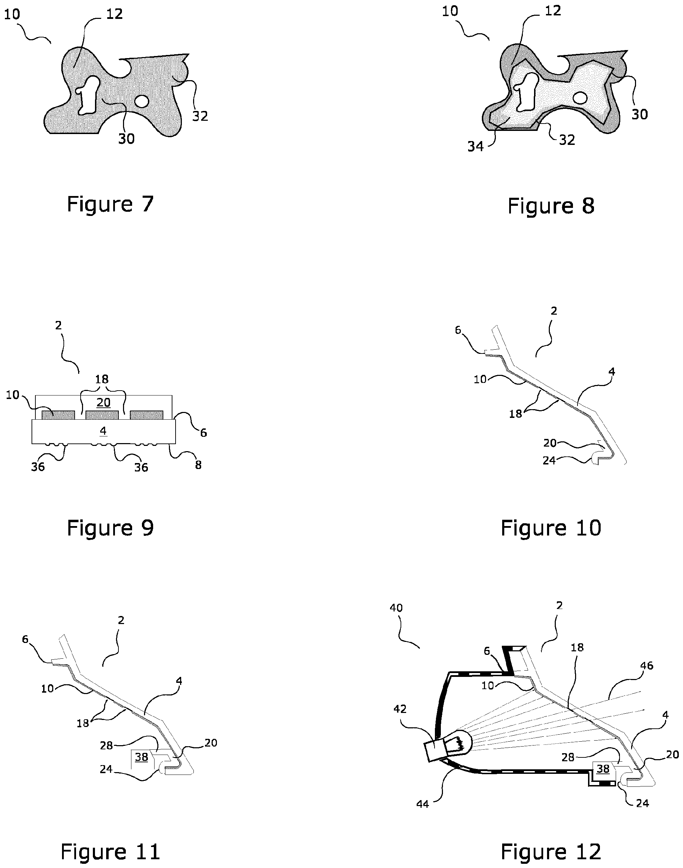

Selon une première variante de réalisation illustrée à la figure 7, le film décoratif 10 comprend sur sa face arrière 12 un motif 30 délimité par une encre 32 adaptée. Ce mode de réalisation est particulièrement avantageux lorsqu'on souhaite un film décoratif aux motifs complexes et précis. À titre d'exemple, le motif 30 peut être une sérigraphie réalisée sur la face arrière 12 du film décoratif 10. Selon un autre avantage, le film décoratif 10 forme un bouclier de protection thermique permettant de limiter l'élévation de la température de l'encre lors de la troisième étape de surmoulage du deuxième élément 20, afin de préserver les contours et la couleur de l'encre 34. Bien entendu, en fonction de la température à laquelle est exposé le film décoratif 10 lors de cette troisième étape, l'épaisseur et/ou la nature du film décoratif peuvent être adapté(es) afin que la température de l'encre 32 ne dépasse pas une température critique, au-delà de laquelle la couleur de l'encre et la forme du motif délimitée par ladite encre peuvent être dégradées.

Selon une autre variante de réalisation du procédé de fabrication décrit ci-dessus et non représentée, préalablement à la deuxième étape, une colle 34 est appliquée au niveau du pourtour de la face arrière 12 du film décoratif 10 lors d'une étape intermédiaire. La colle 30 est configurée pour permettre un meilleur maintien du film décoratif 10 contre le premier élément 4, lors de la troisième étape de surmoulage du deuxième élément 20. La colle employée est de préférence une colle n'agressant pas chimiquement les éléments de la coque, ni l'encre recouvrant le film décoratif. De préférence, la colle est configurée pour permettre à un opérateur de repositionner à volonté le film décoratif contre le premier élément. Selon une alternative, illustrée à la figure 8, la colle est appliquée sur l'encre 32 de manière à ce que la colle ne soit pas visible par un observateur observant le motif 30 à travers le film décoratif 10. Ce mode de réalisation permet avantageusement de dissimuler les marques de collage derrière le motif 30.

Selon une autre variante illustrée à la figure 9, le premier élément 4 peut comporter des dioptres optiques 36 au niveau de sa face arrière 8, agencés de manière à être alignés avec les trous 18 perforant le film décoratif 10. Par les termes « dioptres optiques », on entend des éléments modifiant la trajectoire d'un faisceau lumineux passant à travers du premier élément 4.

Selon une autre variante illustrée à la figure 10, le premier élément 4 est de forme complexe. Le film décoratif 10 recouvre une partie seulement de la face avant 6 du premier élément 4 et le deuxième élément 20 recouvre également une partie de la face avant 6 du premier élément 4 et une partie de la face avant 14 du film décoratif 10.

Selon une variante illustrée à la figure 11, le deuxième élément 10 comporte au niveau de sa face avant 24 une excroissance 28 configurée pour coopérer avec un support 38, afin de maintenir la coque 2 à distance du support.

Comme illustré à la figure 12, l'invention concerne également une lanterne 40 pour véhicule automobile, comprenant une source de lumière 42 présente dans un caisson 44 ouvert sur un de ses côtés. L'ouverture du caisson est obturée par une coque 2 comme illustrée sur la figure 11, de manière à former une paroi externe de la lanterne. Comme mentionné ci-dessus, le film décoratif 10 est perforé en plusieurs endroits par des trous 18, de manière à laisser passer les rayons lumineux 46 émis par la source de lumière 42. Selon le présent exemple, les autres rayons lumineux sont absorbés partiellement ou totalement par le film décoratif 10 de sorte à démarquer plus nettement les contours des trous 18. Selon une alternative non représentée, le film décoratif peut être partiellement transparent et coloré afin de former un fond de couleur homogène sur lequel se démarquent les motifs formés par les trous 18.

Par ailleurs, diverses autres modifications peuvent être apportées à l'invention dans le cadre des revendications annexées.
trous 18, de manière à laisser passer les rayons lumineux 46 émis par la source de lumière 42. Selon le présent exemple, les autres rayons lumineux sont absorbés partiellement ou totalement par le film décoratif 10 de sorte à démarquer plus nettement les contours des trous 18. Selon une alternative non représentée, le film décoratif peut être partiellement transparent et coloré afin de former un fond de couleur homogène sur lequel se démarquent les motifs formés par les trous 18.

Par ailleurs, diverses autres modifications peuvent être apportées à l'invention dans le cadre des revendications annexées.

## Revendications

1. Procédé de fabrication d'une coque (2), comprenant un film décoratif (10), mettant en œuvre une première étape de moulage d'un matériau plastique de manière à former un premier élément (4), le procédé de fabrication mettant en œuvre une deuxième étape consistant à appliquer un film décoratif (10) perforé contre une face avant (6) du premier élément (4), puis une troisième étape de surmoulage d'un matériau plastique sur au moins une partie du film décoratif (10) et du premier élément (4), de manière à maintenir le film décoratif (10) entre le premier élément (4) et un deuxième élément (20) de la coque (2), selon lequel le premier élément (4) et/ou le deuxième élément (20) comporte(nt) des dioptres optiques (36) alignés avec au moins un trou (18) perforant le film décoratif (10).

2. Procédé de fabrication d'une coque (2) selon la revendication précédente, **caractérisé en ce que** le film décoratif (10) recouvre une partie seulement de la face avant (6) du premier élément (4) de la coque (2).

3. Procédé de fabrication d'une coque (2) selon l'une des revendications précédentes, **caractérisé en ce que** le premier élément (4) et/ou le deuxième élément (20) est transparent et/ou translucide.

4. Procédé de fabrication d'une coque (2) selon l'une des revendications précédentes, **caractérisé en ce que** le film décoratif (10) comporte au moins deux zones transmettant la lumière de façon différente.

5. Procédé de fabrication d'une coque (2) selon l'une des revendications précédentes, **caractérisé en ce que** le film décoratif (10) est recouvert, au moins partiellement, par un dépôt de matière (32).

6. Procédé de fabrication d'une coque (2) selon la revendication précédente, **caractérisé en ce que** le dépôt de matière recouvre la face du film décoratif (10) appliquée contre le premier élément (4).

7. Procédé de fabrication d'une coque (2) selon la revendication 5 ou 6, **caractérisé en ce que** le dépôt de matière (32) est formé à partir d'une encre, comprenant de préférence des éléments métalliques.

8. Procédé de fabrication d'une coque (2) selon l'une des revendications précédentes, **caractérisé en ce qu'**il met en œuvre une étape intermédiaire d'application d'un moyen d'adhésion (34) sur le film décoratif (10), afin d'assurer un meilleur maintien du film décoratif (10) contre le premier élément (4) lors du surmoulage du deuxième élément (20).

9. Procédé de fabrication d'une coque (2) selon l'une des revendications précédentes, **caractérisé en ce que** la face (6) avant du premier élément (4) est de forme complexe et **en ce que** le film décoratif (10) est de forme complémentaire à la face avant (6) du premier élément (4).

10. Procédé de fabrication d'une coque (2) selon l'une des revendications précédentes, **caractérisé en ce que** le film décoratif (10) est un film plastique thermoformé.

11. Procédé de fabrication d'une coque (2) selon l'une des revendications précédentes, **caractérisé en ce que** le deuxième élément (20) de la coque (2) comprend au moins un moyen de fixation (28) configuré pour maintenir la coque (2) à un support (38).

## Patentansprüche

1. Verfahren zur Herstellung einer einen Dekorfilm (10) aufweisenden Schale (2), das einen ersten Schritt des Gießens eines Plastikmaterials ausführt, um ein erstes Element (4) zu formen, wobei das Herstellungsverfahren einen zweiten Schritt ausführt, der darin besteht, einen perforierten Dekorfilm (10) auf eine Vorderseite (6) des ersten Elements (4) aufzubringen, dann einen dritten Schritt des Aufbringens eines Plastikmaterials auf mindestens einen Teil des Dekorfilms (10) und des ersten Elements (4) ausführt, um den Dekorfilm (10) zwischen dem ersten Element (4) und einem zweiten Element (20) der Schale (2) zu erhalten,
gemäß dem das erste Element (4) und/oder das zweite Element (20) optische Diopter (36) aufweist bzw. aufweisen, die auf mindestens ein den Dekorfilm (10) perforierendes Loch (18) ausgerichtet sind.

2. Verfahren zur Herstellung einer Schale (2) gemäß dem vorangehenden Anspruch, **dadurch gekennzeichnet, daß** der Dekorfilm (10) nur einen Teil der Vorderseite (6) des ersten Elements (4) der Schale (2) bedeckt.

3. Verfahren zur Herstellung einer Schale (2) gemäß einem der vorangehenden Ansprüche, **dadurch gekennzeichnet, daß** das erste Element (4) und/oder das zweite Element (20) durchsichtig und/oder durchscheinend ist bzw. sind.

4. Verfahren zur Herstellung einer Schale (2) gemäß einem der vorangehenden Ansprüche, **dadurch gekennzeichnet, daß** der Dekorfilm (10) mindestens zwei das Licht in unterschiedlicher Weise übertragende Zonen aufweist.

5. Verfahren zur Herstellung einer Schale (2) gemäß einem der vorangehenden Ansprüche, **dadurch gekennzeichnet, daß** der Dekorfilm (10) mindestens teilweise durch einen Materialauftrag (32) bedeckt wird.

6. Verfahren zur Herstellung einer Schale (2) gemäß dem vorangehenden Anspruch, **dadurch gekennzeichnet, daß** der Materialauftrag die auf dem ersten Element (4) aufliegende Seite des Dekorfilms (10) bedeckt.

7. Verfahren zur Herstellung einer Schale (2) gemäß Anspruch 5 oder 6, **dadurch gekennzeichnet, daß** der Materialaufrag (32) aus einer vorzugsweise metallene Elemente aufweisenden Tinte gebildet wird.

8. Verfahren zur Herstellung einer Schale (2) gemäß einem der vorangehenden Ansprüche, **dadurch gekennzeichnet, daß** es einen Zwischenschritt des Auftragens eines Haftmittels (34) auf den Dekorfilm (10) ausführt, um beim Überspritzen des zweiten Elements (20) ein besseres Haften des Dekorfilms (10) am ersten Element (4) sicherzustellen.

9. Verfahren zur Herstellung einer Schale (2) gemäß einem der vorangehenden Ansprüche, **dadurch gekennzeichnet, daß** die Vorderseite (6) des ersten Elements (4) eine komplexe Form hat und daß der Dekorfilm (10) eine zur Vorderseite (6) des ersten Elements (4) komplementäre Form hat.

10. Verfahren zur Herstellung einer Schale (2) gemäß einem der vorangehenden Ansprüche, **dadurch gekennzeichnet, daß** der Dekorfilm (10) ein thermisch geformter Plastikfilm ist.

11. Verfahren zur Herstellung einer Schale (2) gemäß einem der vorangehenden Ansprüche, **dadurch gekennzeichnet, daß** das zweite Element (20) der Schale (2) mindestens ein Befestigungsmittel (28) für das Festhalten der Schale (2) an einem Träger (38) aufweist.

## Claims

1. A method for manufacturing a shell (2), comprising a decorative film (10), implementing a first step of moulding a plastic material so as to form a first element (4), **characterized in that** the manufacturing method implements a second step consisting in applying a decorative film (10) against a front face (6) of the first element (4), then a third step of overmoulding a plastic material on at least one part of the decorative film (10) and of the first element (4), so as to maintain the decorative film (10) between the first element (4) and a second element (20) of the shell (2), wherein the first element (4) and/or the second element (20) include optical dioptres (36) aligned with at least one hole (18) perforating the decorative film (10).

2. The method for manufacturing a shell (2) according to the previous claim, **characterized in that** the decorative film (10) covers only a part of the front face (6) of the first element (4) of the shell (2).

3. The method for manufacturing a shell (2) according to one of the previous claims, **characterized in that** the first element (4) and/or the second element (20) is transparent and/or translucent.

4. The method for manufacturing a shell (2) according to one of the previous claims, **characterized in that** the decorative film (10) includes at least two areas transmitting differently the light.

5. The method for manufacturing a shell (2) according to one of the previous claims, **characterized in that** the decorative film (10) is covered, at least partially, by a deposit of material (32).

6. The method for manufacturing a shell (2) according to the previous claim, **characterized in that** the deposit of material covers the face of the decorative film (10) applied against the first element (4).

7. The method for manufacturing a shell (2) according to claim 5 or 6, **characterized in that** the deposit of material (32) is formed from an ink, comprising preferably metallic elements.

8. The method for manufacturing a shell (2) according to one of the previous claims, **characterized in that** it implements an intermediate step of applying bond mean (34) on the decorative film (10), in order to ensure a better holding of the decorative film (10) against the first element (4) during the overmoulding of the second element (20).

9. The method for manufacturing a shell (2) according to one of the previous claims, **characterized in that** the front face (6) of the first element (4) has a complex shape and **in that** the decorative film (10) has a shape complementary to that of the front face (6) of the first element (4).

10. The method for manufacturing a shell (2) according to one of the previous claims, **characterized in that** the decorative film (10) is a thermoformed plastic film.

11. The method for manufacturing a shell (2) according to one of the previous claims, **characterized in that** the second element (20) of the shell (2) comprises at least one fixation means (28) configured to maintain the shell (2) to a support (38).
